(19) Europäisches Patentamt
European Patent Office
Office européen des brevets

(11) **EP 2 947 170 B1**

(12) **EUROPEAN PATENT SPECIFICATION**

(45) Date of publication and mention
of the grant of the patent:
**13.02.2019 Bulletin 2019/07**

(21) Application number: **14770563.6**

(22) Date of filing: **13.03.2014**

(51) Int Cl.:
*C22C 38/00* (2006.01)          *C22C 38/58* (2006.01)
*C21D 8/02* (2006.01)           *C21D 6/00* (2006.01)
*C21D 9/46* (2006.01)           *C22C 38/02* (2006.01)
*C22C 38/04* (2006.01)          *C22C 38/06* (2006.01)
*C22C 38/42* (2006.01)          *C22C 38/44* (2006.01)
*C22C 38/46* (2006.01)          *C22C 38/48* (2006.01)
*C22C 38/50* (2006.01)          *C22C 38/52* (2006.01)
*C22C 38/54* (2006.01)

(86) International application number:
**PCT/JP2014/001424**

(87) International publication number:
**WO 2014/148015 (25.09.2014 Gazette 2014/39)**

(54) **STAINLESS STEEL SHEET**

EDELSTAHLBLECH

TÔLE D'ACIER INOXYDABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2013 JP 2013056715**

(43) Date of publication of application:
**25.11.2015 Bulletin 2015/48**

(73) Proprietor: **JFE Steel Corporation
Tokyo 100-0011 (JP)**

(72) Inventors:
• **FUJISAWA, Mitsuyuki
Tokyo 100-0011 (JP)**
• **OTA, Hiroki
Tokyo 100-0011 (JP)**

• **OGATA, Hiroyuki
Tokyo 100-0011 (JP)**

(74) Representative: **Hoffmann Eitle
Patent- und Rechtsanwälte PartmbB
Arabellastraße 30
81925 München (DE)**

(56) References cited:
**EP-A1- 1 199 374          EP-A1- 2 439 304
WO-A1-2012/157680          WO-A1-2012/157680
WO-A1-2014/123229          JP-A- 2001 192 735
JP-A- 2001 220 654          JP-A- 2001 355 049
JP-A- 2002 129 292          JP-A- 2002 146 488
JP-A- 2003 268 507          JP-A- 2005 126 735
JP-A- 2006 322 071          JP-A- 2007 247 027
JP-A- 2007 247 027          JP-A- 2011 012 343**

**Description**

Technical Field

The present invention relates to a stainless steel sheet in which a martensite structure is formed by performing quenching. The stainless steel sheet according to the present invention can preferably be used for manufacturing brake disks.

Background Art

Nowadays, the stainless steel sheet in which a martensite structure is formed by performing quenching (hereinafter, referred to as "stainless steel sheet") is used for the brake disks of motorcycles and bicycles. For example, Patent Literature 1 and Patent Literature 2 disclose stainless steel sheets excellent in terms of temper softening resistance after performing quenching which are obtained by optimizing the steel chemical composition as stainless steel sheets which can be used for the brake disks of motorcycles and bicycles.

However, currently, a cast iron is used as a material for the brake disks for automobiles instead of the stainless steel sheet. Since the shape of the brake disks for automobiles is different from that for motorcycles or bicycles, it is necessary to perform severe forming (for example, forming accompanied by a large amount of deformation) in order to manufacture brake disks for automobiles from a steel sheet. Therefore, the stainless steel sheets according to Patent Literature 1 and Patent Literature 2 cannot be used because of their lack of formability.

However, since the stainless steel sheet has better heat resistance than the cast iron, weight saving of automobiles can be realized due to the size reduction of the brake disk by using the stainless steel sheet. Also, since the stainless steel sheet has high corrosion resistance in addition to better heat resistance than the cast iron, the stainless steel sheet is less likely to rust. Therefore, it is considered that the brake disk composed of the stainless steel sheet is also excellent in terms of appearance. PTL 3 describes a martensitic stainless steel for a disc break rotor comprising in mass%, C: 0.04-0.10%, Si: 0-1.0%, Mn: 0.1-2.0%, P: 0-0.04%, S: 0-0.01%, Cr: greater than 11.5 to 13.5%, Al: 0-0.1%, N: 0-0.04%, Cu: 0-1.0%, Ni: 0-1.0%, Ti: 0-0.03% and one or more of Nb: 0.01-0.08% and V: 0.05-0.5%, wherein the value of GP expressed by the following formula is at least 50 (%): GP (%) = 700C(%) + 800N(%) + 20Ni(%) + 10[Cu(%) + Mn(%)] - 6.2Cr(%) - 9.2Si(%) - 9.3Mo(%) - 14V(%) - 74.4Ti(%) - 37.2Al(%) + 63.2.

PTL4 describes a steel sheet for a break disc, comprising, on a mass% basis: 0.02% or more and less than 0.10% C, 0.6% or less Si, more than 0.5% and 2.0% or less Mn, 0.06% or less P, 0.01% or less S, 0.05% or less Al, 11.0% to 13.5% Cr, 0.01% to 0.30% Ni, 0.10% to 0.60% Nb, 0.03% or more and less than 0.10% N, more than 0.0010% and 0.0060% or less B, and the balance being Fe and incidental impurities, wherein the steel sheet after quenching has a hardness of 32 HRC to 40 HRC in terms of Rockwell hardness scale C (HRC), and the steel sheet satisfies expressions (1) to (3) :

$$420C + 470N + 23Ni + 9Cu + 7Mn - 11.5Cr - 11.5Si - 12Mo -$$
$$47Nb - 52Al - 49Ti - 23V + 189 \geq 85 \qquad (1)$$

$$0.04 \leq C + N - 13(Nb/93 + Ti/48 + Zr/91 + V/51) - 14B/11 \leq$$
$$0.09 \qquad (2)$$

$$C - 12(Nb/93 + Ti/48 + Zr/91 + V/51 + Mo/96 + Ta/181 +$$
$$W/184) \leq 0.045 \qquad (3)$$

PTL5 describes a high heat resistant Cr-containing steel for a brake disc having a composition which is composed of, by mass%, 0.01 to 0.10% C, 0.3 to 2.5% Mn, ≤0.5% Si, ≤0.04% P, ≤0.008% S, 10.5 to 14.5% Cr, ≤0.10% Al, 0.030 to 0.080% N, 0.05 to 0.60% Nb, 0.1 to 1.5% Ni, further ≤0.0050% B within the range satisfying a relation of B/N ≥ 0.030, further 0.05 to 2.5%, in total, of one or more elements selected from Cu, V, Mo, W, Ta and Ti, and the balance Fe with inevitable impurities.

PTL6 describes a martensitic stainless steel plate for a bicycle disc break rotor. The martensitic stainless steel plate is based on a low-carbon and low-nitrogen stainless steel satisfying C: 0.070-0.120% and N: 0.015-0.060%, with C+N: 0.09-0.15%. The martensitic stainless steel plate is characterized in that it contains Cu: 0.1% or less and Mn: 1.0-1.4%, the remainder is Fe and unavoidable impurities, $\gamma p$, which is an index representing the phase balance during hot rolling, is 80-120, and the HRC hardness after quenching is 38-44.

Citation List

Patent Literature

PTL 1: Japanese Unexamined Patent Application Publication No. 2002-146489
PTL 2: Japanese Unexamined Patent Application Publication No. 2004-346425
PTL 3: EP 1 199 374 A1
PTL 4: EP 2 439 304 A1
PTL 5: JP 2007 247027 A
PTL 6: WO 2012/157680 A1

Summary of Invention

Technical Problem

The present invention has been completed in order to solve the problem described above, and an object of the present invention is to provide a stainless steel sheet excellent in terms of formability which makes it possible to manufacture brake disks for automobiles by performing severe forming.

Solution to Problem

The present inventors, in order to solve the problem described above, diligently conducted investigations focusing on a microstructure of a stainless steel sheet in a manufacturing process and a microstructure of the stainless steel sheet after the manufacturing process. Here, the microstructure of the stainless steel sheet in a manufacturing process is a dual-phase microstructure that includes a ferrite structure and an austenite structure obtained in a manufacturing process such as casting and hot rolling performed at a high temperature. In addition, the microstructure of the stainless steel sheet after the manufacturing process is a ferrite structure. In the former microstructure, cracks tend to occur at grain boundaries due to the differences in high temperature strength and in deformability between the constituent structures of the dual-phase microstructure, in particular, when hot rolling is performed. A method for suppressing such cracks due to the strengthening of grain boundaries by adding B is known. However, the formability of the stainless steel sheet after the manufacturing process having a ferrite structure deteriorates due to the addition of B.
The present inventors found that, while maintaining the effect of suppressing cracks in the stainless steel sheet in a manufacturing process having a dual-phase microstructure consisting of a ferrite structure and an austenite structure by adding B, it is possible to achieve high formability as a result of suppressing a deterioration in formability of the stainless steel sheet after the manufacturing process having a ferrite structure due to the addition of B by adding a certain amount of V with respect to the amount of B, which has led to the completion of the present invention. More specifically, the following inventions are provided.

(1) A stainless steel sheet in which a martensite structure is formed by performing quenching, having a chemical composition consisting of, by mass%, C: 0.015% or more and less than 0.100%, Si: 0.01% or more and 1.00% or less, Mn: 0.01% or more and 2.00% or less, P: 0.040% or less, S: 0.030% or less, Cr: 10.0% or more and less than 14.0%, Ni: 0.01% or more and 0.70% or less, Al: 0.001% or more and 0.200% or less, N: 0.005% or more and 0.080% or less, O: 0.0060% or less, B: 0.0002% or more and 0.0020% or less, V: (10 × B content (%))% or more and 0.050% or less, optionally Ca: 0.0003% or more and 0.0030% or less, optionally at least one selected from Nb: 0.01% or more and 0.10% or less, and Ti: 0.01% or more and 0.40% or less, optionally at least one selected from among Mo: 0.01% or more and 0.30% or less, Cu: 0.01% or more and 1.20% or less, and Co: 0.01% or more and 0.20% or less, and the balance being Fe and inevitable impurities.
(2) The stainless steel sheet according to (1), V: (20 × B content (%))% or more and 0.050% or less.
(3) The stainless steel sheet according to (1) or (2), the chemical composition containing, by mass%, at least one selected from Nb: 0.01% or more and 0.10% or less and Ti: 0.010% or more and 0.40% or less.
(4) The stainless steel sheet according to any one of (1) to (3), the chemical composition containing, by mass%, at least one selected from Mo: 0.01% or more and 0.30% or less, Cu: 0.01% or more and 1.20% or less, and Co:

0.01% or more and 0.20% or less.

(5) The stainless steel sheet according to any one of (1) to (4), the chemical composition containing, by mass%, Ca: 0.0003% or more and 0.0030% or less.

Advantageous Effects of Invention

The stainless steel sheet according to the present invention is excellent in terms of formability. Therefore, the stainless steel sheet according to the present invention makes it possible to manufacture a brake disk for automobiles by performing severe forming.

Description of Embodiments

The stainless steel sheet according to the present invention has a chemical composition consisting of, by mass%, C: 0.015% or more and less than 0.100%, Si: 0.01% or more and 1.00% or less, Mn: 0.01% or more and 2.00% or less, P: 0.040% or less, S: 0.030% or less, Cr: 10.0% or more and less than 14.0%, Ni: 0.01% or more and 0.70% or less, Al: 0.001% or more and 0.200% or less, N: 0.005% or more and 0.080% or less, O: 0.0060% or less, B: 0.0002% or more and 0.0020% or less, V: $(10 \times B$ content (%))% or more and 0.050% or less, optionally Ca: 0.0003% or more and 0.0030% or less, optionally at least one selected from Nb: 0.01% or more and 0.10% or less, and Ti: 0.01% or more and 0.40% or less, optionally at least one selected from among Mo: 0.01% or more and 0.30% or less, Cu: 0.01% or more and 1.20% or less, and Co: 0.01% or more and 0.20% or less, and the balance being Fe and inevitable impurities. Each chemical element will be described hereafter. Here, "%", which is a unit of the content of each chemical element, means "mass%".

C: 0.015% or more and less than 0.100%

In the case where the C content is less than 0.015%, since it is not possible to achieve hardness required for brake disks after performing quenching, the brake disks tend to become worn or deformed in a practical use. In addition, in the case where the C content is 0.100% or more, since there is an excessive increase in hardness after performing quenching, a brake noise occurs in a practical use. Therefore, the C content is set to be 0.015% or more and less than 0.100%, preferably 0.020% or more and 0.083% or less.

Si: 0.01% or more and 1.00% or less

Si is effective as a deoxidizing agent. Such an effect is realized in the case where the Si content is 0.01% or more. However, in the case where the Si content is more than 1.00%, there is a deterioration in formability. Therefore, the Si content is set to be 0.01% or more and 1.00% or less, preferably 0.10% or more and 0.50% or less, more preferably 0.10% or more and 0.43% or less, most preferably 0.25% or more and 0.30% or less.

Mn: 0.01% or more and 2.00% or less

Mn is effective as a deoxidizing agent. Such an effect is realized in the case where the Mn content is 0.01% or more. In addition, by adding Mn, there is an improvement in hardenability as a result of promoting the formation of austenite structure at a high temperature. However, in the case where the Mn content is more than 2.00%, there is a deterioration in corrosion resistance. Therefore, the Mn content is set to be 0.01% or more and 2.00% or less, preferably 0.20% or more and 1.80% or less.

P: 0.040% or less

In the case where P is added in a certain amount or more, there is a tendency for hot workability to deteriorate. In the case where there is a deterioration in hot workability, it is difficult to manufacture brake disks. Therefore, the P content is set to be 0.040% or less, preferably 0.030% or less.

S: 0.030% or less

Since there is a deterioration in corrosion resistance in the case where S is added in a certain amount or more, the S content is set to be 0.030% or less, preferably 0.010% or less.

Cr: 10.0% or more and less than 14.0%

Cr is a chemical element which contributes to an improvement in corrosion resistance. It is necessary that the Cr content be 10.0% or more in order to realize this effect. However, in the case where the Cr content is 14.0% or more, it is not possible to obtain a sufficient amount of martensite structure after performing quenching. Therefore, the Cr content is set to be 10.0% or more and less than 14.0%, preferably 10.5% or more and 13.0% or less.

Ni: 0.01% or more and 0.70% or less

Ni improves not only corrosion resistance but also toughness after performing quenching. Such effects are realized in the case where the Ni content is 0.01% or more. However, Ni is an expensive chemical element, and such an effect becomes saturated in the case where the Ni content is more than 0.70%. Therefore, the Ni content is set to be 0.01% or more and 0.70% or less, preferably 0.01% or more and 0.40% or less, more preferably 0.01% or more and 0.20% or less.

Al: 0.001% or more and 0.200% or less

Al is effective as a deoxidizing agent. Such an effect is realized in the case where the Al content is 0.001% or more. However, in the case where the Al content is more than 0.200%, there is a deterioration in hardenability. Therefore, the Al content is set to be 0.001% or more and 0.200% or less, preferably 0.001% or more and 0.008% or less.

N: 0.005% or more and 0.080% or less

N, like C, contributes to an increase in hardness after performing quenching. In the case where the N content is less than 0.005%, it is not possible to achieve hardness required for brake disks after performing quenching. Brake disks having insufficient hardness tend to be deformed in a practical use. In addition, in the case where the N content is more than 0.080%, since blowholes are formed in steel at performing casting, surface defects occur. Therefore, the N content is set to be 0.005% or more and 0.080% or less.

O: 0.0060% or less

In the case where O is contained, inclusions are formed in steel. In the case where inclusions are formed, there is a deterioration in formability of the stainless steel sheet. Therefore, the O content is set to be 0.0060% or less, preferably 0.0045% or less.

B: 0.0002% or more and 0.0020% or less

B is a chemical element which is effective for improving hot workability at performing casting or hot rolling. By adding B in an amount of 0.0002% or more, B is segregated at the grain boundaries between ferrite grains and austenite grains. Since there is an increase in grain boundary strength due to this segregation, it is possible to prevent cracks from occurring at performing hot working. However, it is not preferable that the B content be more than 0.0030%, because this results in a deterioration in formability and toughness of the stainless steel sheet. Therefore, the B content is set to be 0.0002% or more and 0.0020% or less.

V: $(10 \times$ B content (%))% or more and 0.050% or less

Ordinarily, by adding B, there is an improvement in hot workability, and there is an increase in strength of steel. However, there is a deterioration in ductility by adding B, which results in a tendency for the formability of the stainless steel sheet in the formation of brake disc at room temperature to deteriorate. V is an important chemical element which reduces such a negative effect of B on the formability. By adding V in an amount of $(10 \times$ B content (%))% or more, there is an improvement in formability of the stainless steel sheet. It is more preferable that the V content be $(20 \times$ B content (%))% or more. In the case where B is added, BN is formed at grain boundaries and inside grains. It is considered that this BN deteriorates the formability at room temperature. By adding V, VN is formed. It is considered that, since this VN decreases the amount of BN, which has a negative effect on the formability of the stainless steel sheet, there is an improvement in formability. On the other hand, in the case where the V content is more than 0.300%, since there is an increase in hardness of steel, there is rather a deterioration in formability. Therefore, the V content is set to be $(10 \times$ B content (%))% or more and 0.050% or less, preferably $(20 \times$ B content (%))% or more and 0.050% or less.

It is preferable to add at least one selected from Nb and Ti to the stainless steel sheet according to the present invention in addition to the essential chemical elements described above.

Nb: 0.01% or more and 0.10% or less

Nb is a chemical element which improves temper softening resistance of steel after performing quenching. Such an effect is realized in the case where the Nb content is 0.01% or more. However, in the case where the Nb content is more than 0.40%, there is a decrease in hardness after performing quenching. Therefore, in the case where Nb is added, the Nb content is set to be 0.01% or more and 0.10% or less.

Ti: 0.01% or more and 0.40% or less

Ti is a chemical element which improves corrosion resistance of steel after performing quenching. Such an effect is realized in the case where the Ti content is 0.01% or more. However, in the case where the Ti content is more than 0.40%, there is a decrease in hardness after performing quenching. Therefore, in the case where Ti is added, the Ti content is set to be 0.01% or more and 0.40% or less, preferably 0.01% or more and 0.10% or less.
It is preferable to further add at least one selected from Mo, Cu, and Co to the stainless steel sheet according to the present invention in addition to the chemical elements described above.

Mo: 0.01% or more and 0.30% or less

Mo is a chemical element which improves corrosion resistance of steel. Such an effect is realized in the case where the Mo content is 0.01% or more. However, in the case where the Mo content is more than 0.30%, since the formation of austenite structure is suppressed at a high temperature, there is a deterioration in hardenability. Therefore, in the case where Mo is added, the Mo content is set to be 0.01% or more and 0.30% or less, preferably 0.01% or more and 0.20% or less, more preferably 0.01% or more and 0.10% or less.

Cu: 0.01% or more and 1.20% or less

Cu is a chemical element which improves temper softening resistance of steel after performing quenching. Such an effect is realized in the case where the Cu content is 0.01% or more. However, in the case where the Cu content is more than 1.20%, there is a deterioration in corrosion resistance. Therefore, in the case where Cu is added, the Cu content is set to be 0.01% or more and 1.20% or less.

Co: 0.01% or more and 0.20% or less

Co is a chemical element which improves toughness. Such an effect is realized in the case where the Co content is 0.01% or more. However, in the case where the Co content is more than 0.20%, there is a deterioration in formability of the stainless steel sheet. Therefore, in the case where Co is added, the Co content is set to be 0.01% or more and 0.20% or less.
It is preferable to further add Ca to the stainless steel sheet according to the present invention in addition to the chemical elements described above.

Ca: 0.0003% or more and 0.0030% or less

Ca prevents the blockage of a nozzle, which is caused by TiS when Ti-containing steel is cast, by forming CaS in molten steel. Such an effect is realized in the case where the Ca content is 0.0003% or more. However, in the case where the Ca content is more than 0.0030%, there is a deterioration in corrosion resistance. Therefore, in the case where Ca is added, the Ca content is set to be 0.0003% or more and 0.0030% or less.

The balance: Fe and inevitable impurities

The balance of the chemical composition is Fe and inevitable impurities in addition to the essential chemical elements described above and the selective chemical elements described above.
Subsequently, a method for manufacturing the stainless steel sheet will be described.
For example, molten steel having the chemical composition described above is manufactured using a converter furnace, an electric furnace, or the like. Then, the molten steel is subjected to secondary refining using, for example, a VOD (Vacuum Oxygen Decarburization) method or an AOD (Argon Oxygen Decarburization) method, and made into a steel using a commonly well-known casting method.

Thereafter, the steel mentioned above is heated at a temperature of 1100°C to 1300°C. Then, the heated steel is hot-rolled into a hot-rolled steel sheet having a specified thickness, which is a stainless steel sheet according to the present invention. Generally, a hot-rolled steel sheet having a thickness of about 3 to 8 mm is used for manufacturing brake disks.

The steel mentioned above has a microstructure including, by vol%, 10% to 50% of a ferrite structure and the balance being an austenite structure when the steel is heated at a temperature of 1100°C to 1300°C. In the case where the dual-phase microstructure mentioned above is present, intercrystalline cracks tend to occur due to the differences in hot strength and in deformability between the constituent structures of the dual-phase microstructure. In order to prevent such intercrystalline cracks from occurring, it is considered to be effective to form an austenite single structure by heating the steel at a temperature of 900°C to 1100°C and by performing hot rolling. However, in the case where the working temperature at hot rolling is low, since it is necessary to decrease rolling reduction because of the high deformation resistance, it is not possible to obtain a hot-rolled steel sheet having a thickness of 3 to 8 mm.

However, according to the present invention, since a certain amount or more of B is added, grain boundaries are strengthened even in the case where hot rolling is performed after heating at a temperature of 1100°C to 1300°C, which results in intercrystalline cracks being prevented.

It is preferable that the stainless steel sheet be manufactured by performing, as needed, hot band annealing on this hot-rolled steel sheet at a temperature of 700°C to 900°C for a holding time of 5 to 15 hours. Moreover, descaling may be performed as needed by performing pickling, shot blasting, or the like.

Also, the stainless steel sheet may be manufactured by performing cold rolling on the hot-rolled steel sheet, by thereafter performing annealing at a temperature of 600°C to 800°C, and by performing a pickling treatment as needed.

The microstructure of the stainless steel sheet (hot-rolled steel sheet or cold-rolled steel sheet) which is obtained as described above is a ferrite structure at room temperature. Since the steel sheet has a ferrite structure, the steel sheet is easy to be formed. Phases other than a ferrite structure may be slightly included. For example, a martensite structure and an austenite structure may be included in an amount of 10 vol% or less in total in addition to a ferrite structure.

Here, since the steel has a dual-phase microstructure at a high temperature, intercrystalline cracks tend to occur when hot rolling is performed as described above. According to the present invention, since a certain amount or more of B is added, it is possible to suppress the occurrence of intercrystalline cracks.

Hereinafter, a method for manufacturing brake disks from the stainless steel sheet will be described. The stainless steel sheet (cold-rolled steel sheet or hot-rolled steel sheet) is formed into a desired shape by performing, for example, punching.

Generally, the formability of a stainless steel sheet containing B in a certain amount or more (sufficient to suppress the occurrence of intercrystalline cracks described above) is low. This is thought to be because BN is formed. According to the present invention, since V is added in a certain amount or more, VN is formed. Therefore, it is considered that since the formation of BN is suppressed, it is possible to obtain a stainless steel sheet excellent in terms of formability.

As described above, since the stainless steel sheet according to the present invention is excellent in terms of formability, forming defects are less likely to occur even in the case where severe forming is performed. For example, it is possible to form even a hat type brake disk used for automobiles.

The hat type brake disk consists of a central bulging part and a peripheral flange part having a constant width. The central bulging part of the brake disk is fixed to the axis of rotation, and a brake pad is pressed against the flange part. The hat type brake disk is manufactured by forming a disk-shaped stainless steel sheet so that the inner peripheral part of the stainless steel sheet is elongated in a perpendicular direction. The stainless steel sheet according to the present invention, which has been formed to have circularity, can be formed into a shape in which the inner edge is elongated in a perpendicular direction independently of the purpose of use.

Subsequently, the brake disk formed as described above is subjected to a quenching treatment in which the brake disk is heated to a specified quenching temperature using, for example, a high-frequency induction heating method and then cooled so that the brake disk has desired hardness. The brake disk becomes hard, because the microstructure is transformed to a martensite structure by performing the quenching treatment.

The degree of hardness depends on the purpose of use, and, in the case of a brake disk for automobiles, it is preferable that the hardness be 20 to 45 in terms of HRC (Rockwell Hardness C-Scale) after performing quenching.

In the case of a brake disk for automobiles, it is preferable that the quenching treatment described above be performed in a manner such that the brake disk is heated to a specified temperature selected in a range of 900°C to 1100°C, held at this temperature for 30 to 600 seconds, and cooled at a cooling rate of 1°C/s to 100°C/s.

Here, a product (brake disk) is generally obtained by removing scale, which has been formed on the surface of the brake disk by performing the quenching treatment described above, using a shot blasting method and the like, furthermore, if necessary, by painting parts other than the part against which a brake pad is pressed or punching shear surfaces, and finally by performing machining operations on the site of friction described above in order to achieve satisfactory mechanical accuracy.

EXAMPLES

The present invention will be specifically described using examples hereafter. Here, the present invention is not limited to the examples below.

By preparing steels having the chemical compositions given in Table 1, by heating the steels at a temperature of 1200°C, and by hot rolling the steels, hot-rolled steel sheets having a thickness of 5 mm were manufactured. The hot-rolled steel sheets were annealed at a temperature of 830°C for 10 hours and slowly cooled so that the microstructure became a ferrite structure. Using these hot-rolled and annealed steel sheets, the following evaluation tests were conducted.

[TABLE 1]

Unit: mass%

| Steel No. | C | Si | Mn | P | S | Cr | Ni | Al | N | O | B | V | B×10 | Ti | Nb | Mo | Cu | Co | Ca | Note |
|---|---|---|---|---|---|---|---|---|---|---|---|---|---|---|---|---|---|---|---|---|
| 1 | 0.083 | 0.29 | 1.53 | 0.024 | 0.006 | 12.2 | 0.06 | 0.004 | 0.011 | 0.0025 | 0.0005 | 0.010 | 0.005 | - | - | - | - | - | - | Example |
| 2 | 0.081 | 0.32 | 1.51 | 0.025 | 0.005 | 12.3 | 0.15 | 0.006 | 0.010 | 0.0028 | 0.0008 | 0.020 | 0.008 | 0.02 | 0.01 | 0.04 | 0.02 | 0.01 | 0.0005 | Example |
| 3 | 0.025 | 0.43 | 0.55 | 0.025 | 0.006 | 11.4 | 0.05 | 0.001 | 0.012 | 0.0052 | 0.0005 | 0.011 | 0.005 | - | - | 0.05 | 0.02 | - | - | Example |
| 4 | 0.040 | 0.25 | 0.35 | 0.020 | 0.006 | 13.5 | 0.05 | 0.002 | 0.050 | 0.0045 | 0.0004 | 0.022 | 0.004 | - | - | - | - | - | - | Example |
| 5 | 0.053 | 0.31 | 1.55 | 0.022 | 0.003 | 12.3 | 0.53 | 0.002 | 0.011 | 0.0031 | 0.0018 | 0.021 | 0.018 | - | - | - | - | 0.02 | - | Example |
| 6 | 0.033 | 0.28 | 0.34 | 0.031 | 0.007 | 13.2 | 0.07 | 0.120 | 0.033 | 0.0048 | 0.0019 | 0.042 | 0.019 | - | - | - | 0.03 | - | 0.0005 | Example |
| 7 | 0.049 | 0.29 | 1.56 | 0.028 | 0.004 | 12.2 | 0.06 | 0.003 | 0.015 | 0.0059 | 0.0015 | 0.033 | 0.015 | - | - | - | - | - | - | Example |
| 8 | 0.053 | 0.25 | 0.40 | 0.019 | 0.004 | 13.2 | 0.03 | 0.002 | 0.026 | 0.0060 | 0.0008 | _0.095_ | 0.008 | - | - | 0.03 | - | - | - | Reference Example |
| 9 | 0.051 | 0.31 | 1.49 | 0.020 | 0.002 | 12.4 | 0.06 | 0.002 | 0.045 | 0.0029 | 0.0016 | 0.032 | 0.016 | - | _0.14_ | - | - | - | - | Reference Example |
| 10 | 0.042 | 0.30 | 0.85 | 0.020 | 0.001 | 12.2 | 0.60 | 0.005 | 0.040 | 0.0051 | 0.0020 | _0.102_ | 0.020 | - | _0.12_ | - | 0.98 | - | - | Reference Example |
| 11 | 0.048 | 0.25 | 1.71 | 0.020 | 0.001 | 12.1 | 0.60 | 0.003 | 0.063 | 0.0034 | 0.0019 | _0.203_ | 0.019 | - | _0.22_ | - | - | - | - | Reference Example |
| 12 | 0.020 | 0.25 | 1.90 | 0.031 | 0.007 | 11.1 | 0.65 | 0.102 | 0.016 | 0.0057 | 0.0018 | _0.100_ | 0.018 | 0.22 | - | - | - | - | 0.0013 | Reference Example |
| 13 | _0.005_ | 0.29 | 1.51 | 0.023 | 0.003 | 12.5 | 0.04 | 0.003 | 0.041 | 0.0035 | 0.0018 | _0.005_ | 0.018 | - | - | - | - | - | - | Comparative Example |
| 14 | 0.050 | 0.33 | 1.48 | 0.026 | 0.004 | 12.2 | 0.07 | 0.003 | 0.013 | 0.0041 | 0.0015 | _0.008_ | 0.015 | - | - | - | - | - | - | Comparative Example |
| 15 | 0.050 | 0.28 | 1.48 | 0.028 | 0.005 | 12.3 | 0.05 | 0.005 | 0.010 | 0.0031 | _0.0001_ | 0.030 | 0.001 | - | - | - | - | - | - | Comparative Example |
| 16 | 0.045 | 0.31 | 1.48 | 0.028 | 0.003 | 12.4 | 0.05 | 0.003 | 0.012 | 0.0041 | _0.0035_ | 0.050 | 0.035 | - | - | - | - | - | - | Comparative Example |
| 17 | 0.050 | 0.30 | 1.45 | 0.028 | 0.002 | 12.2 | 0.05 | 0.005 | 0.008 | 0.0028 | 0.0020 | _0.035_ | 0.020 | - | - | - | - | - | - | Comparative Example |
| 18 | 0.045 | 0.30 | 1.48 | 0.025 | 0.003 | _9.5_ | 0.05 | 0.005 | 0.012 | 0.0030 | 0.0010 | 0.020 | 0.010 | - | - | - | - | - | - | Comparative Example |

* "B × 10" means (B content (%)×10)

An underlined portion indicates a value out of the range according to the present invention.

Tensile test

Using a JIS No. 5 test piece having a gauge length of 50 mm which had been collected from the hot-rolled and annealed steel sheet described above, a fracture elongation value was measured under condition that the crosshead speed was 10 mm/min. The results are given in Table 2. Here, in the present invention, a case where a fracture elongation value is 30% or more is judged as satisfactory.

Measurement of Lankford value (r value)

By conducting a tensile test using the same method as used in the tensile test described above, by finishing the test with a strain of 15%, and by measuring a change in the width of the parallel portion and a change in thickness, r value was calculated. The results are given in Table 2. Here, in the present invention, a case where r value is 1.0 or more is judged as satisfactory.

Hole expansion test

By pressing a punch having a point angle of 60 degrees through a punching hole having a diameter of 10 mm, a hole expansion ratio ($\lambda$) when a crack occurred was measured. The hole expansion ratio was calculated using the equation below. The results are given in Table 2. Here, in the present invention, a case where $\lambda$ is 140% or more is judged as satisfactory.

$$\lambda\ (\%) = \{(d - d_0)/d_0\} \times 100$$

In the equation above, d represents the diameter (mm) of the hole when a crack occurred and $d_0$ represents the initial diameter (mm) of the hole.

Hot workability test

By heating a cast piece having a thickness of 100 mm and a width of 100 mm at a temperature of 1200°C for 1 hour, and by performing 3 passes of hot rolling to a thickness of 20 mm, the presence of cracks on the side surface (within a range of a thickness of 20 mm and a length of 200 mm) was investigated. Steel in which 3 or more cracks having a length of 5 mm or more were confirmed was judged as "× (unsatisfactory)", and steel in which less than 3 cracks having a length of 5 mm or more were confirmed was judged as "○ (satisfactory)".

Corrosion resistance test

After having heated the hot-rolled and annealed steel sheet described above at a temperature of 1000°C for 1 minute, the heated steel sheet was cooled with air, and pitting potential measurement was conducted in a 0.5% NaCl (35°C) solution. A case where a pitting potential was 100 (mV vs. SCE) or more was judged as "○ (satisfactory)", and a case where a pitting potential was less than 100 (mV vs. SCE) was judged as "× (unsatisfactory)".

[Table 2]

| Steel No. | Fracture Elongation Value (%) | r Value | λ (%) | Hot Workability | Corrosion Resistance after Quenching | Note |
|---|---|---|---|---|---|---|
| 1 | 32 | 1.1 | 153 | ○ | ○ | Example |
| 2 | 31 | 1.1 | 156 | ○ | ○ | Example |
| 3 | 34 | 1.2 | 161 | ○ | ○ | Example |
| 4 | 34 | 1.2 | 163 | ○ | ○ | Example |
| 5 | 32 | 1.1 | 156 | ○ | ○ | Example |
| 6 | 34 | 1.2 | 165 | ○ | ○ | Example |
| 7 | 32 | 1.1 | 160 | ○ | ○ | Example |
| 8 | 34 | 1.2 | 164 | ○ | ○ | Reference Example |
| 9 | 33 | 1.1 | 158 | ○ | ○ | Reference Example |
| 10 | 34 | 1.2 | 167 | ○ | ○ | Reference Example |
| 11 | 34 | 1.3 | 170 | ○ | ○ | Reference Example |
| 12 | 34 | 1.3 | 193 | ○ | ○ | Reference Example |
| 13 | <u>29</u> | <u>0.9</u> | <u>131</u> | ○ | ○ | Comparative Example |
| 14 | <u>27</u> | <u>0.8</u> | <u>105</u> | ○ | ○ | Comparative Example |
| 15 | 31 | 1.1 | 158 | <u>×</u> | ○ | Comparative Example |
| 16 | <u>27</u> | <u>0.9</u> | <u>110</u> | ○ | ○ | Comparative Example |
| 17 | <u>27</u> | <u>0.8</u> | <u>105</u> | ○ | ○ | Comparative Example |
| 18 | 32 | 1.1 | 160 | ○ | <u>×</u> | Comparative Example |
| An underlined portion indicates an unsatisfactory result. | | | | | | |

The examples of the present invention and reference examples are superior to the comparative examples in terms of fracture elongation value, r value, and hole expansion ratio ($\lambda$), which means that the examples of the present invention and reference examples have satisfactory formability. By using the examples of the present invention and reference examples, it is possible to manufacture even a hat type brake disk. Therefore, by forming the hot-rolled and annealed steel sheet described above into a hat type brake disk, and by performing quenching, a hat type brake disk is obtained.

Industrial Applicability

The present invention relates to a stainless steel sheet excellent in terms of formability. Examples of its application field include a brake disk made of the stainless steel sheet having a martensite structure which is formed by performing quenching after forming. The stainless steel sheet according to the present invention can preferably be used as the brake disks not only for motorcycles and bicycles but also for automobiles (including, for example, electric vehicles and hybrid automobiles) having a hat shape which are difficult to be formed. The hot-rolled and annealed steel sheet and the cold-rolled and annealed steel sheet are both effectively used.

**Claims**

1.    A stainless steel sheet in which a martensite structure is formed by performing quenching, having a chemical composition consisting of, by mass%, C: 0.015% or more and less than 0.100%, Si: 0.01% or more and 1.00% or less, Mn: 0.01% or more and 2.00% or less, P: 0.040% or less, S: 0.030% or less, Cr: 10.0% or more and less than 14.0%, Ni: 0.01% or more and 0.70% or less, Al: 0.001% or more and 0.200% or less, N: 0.005% or more and 0.080% or less, O: 0.0060% or less, B: 0.0002% or more and 0.0020% or less, V: (10 $\times$ B content (%))% or more and 0.050% or less, optionally Ca: 0.0003% or more and 0.0030% or less, optionally at least one selected from Nb: 0.01% or more and 0.10% or less, and Ti: 0.01% or more and 0.40% or less, optionally at least one selected from among Mo: 0.01% or more and 0.30% or less, Cu: 0.01% or more and 1.20% or less, and Co: 0.01% or more and 0.20% or less, and the balance being Fe and inevitable impurities.

2.    The stainless steel sheet according to Claim 1, V: (20 $\times$ B content (%))% or more and 0.050% or less.

3.    The stainless steel sheet according to Claim 1 or 2, the chemical composition containing, by mass%, at least one selected from Nb: 0.01% or more and 0.10% or less and Ti: 0.01% or more and 0.40% or less.

4.    The stainless steel sheet according to any one of Claims 1 to 3, the chemical composition containing, by mass%, at least one selected from among Mo: 0.01% or more and 0.30% or less, Cu: 0.01% or more and 1.20% or less, and Co: 0.01% or more and 0.20% or less.

5.    The stainless steel sheet according to any one of Claims 1 to 4, the chemical composition containing, by mass%, Ca: 0.0003% or more and 0.0030% or less.

**Patentansprüche**

1.    Edelstahlblech, in dem ein Martensitgefüge durch das Durchführen von Abschrecken gebildet wird, umfassend eine chemische Zusammensetzung, die, in Massen%, aus: C: 0,015% oder mehr und weniger als 0,100%, Si: 0,01% oder mehr und 1,00% oder weniger, Mn: 0,01% oder mehr und 2,00% oder weniger, P: 0,040% oder weniger, S: 0,030% oder weniger, Cr: 10,0% oder mehr und weniger als 14,0%, Ni: 0,01% oder mehr und 0,70% oder weniger, Al: 0,001% oder mehr und 0,200% oder weniger, N: 0,005% oder mehr und 0,080% oder weniger, O: 0,0060% oder weniger, B: 0,0002% oder mehr und 0,0020% oder weniger, V: (10 $\times$ B-Gehalt (%))% oder mehr und 0,050% oder weniger, optional Ca: 0,0003% oder mehr und 0,0030% oder weniger, optional zumindest einem ausgewählt aus Nb: 0,01% oder mehr und 0,10% oder weniger und Ti: 0,01% oder mehr und 0,40% oder weniger, optional zumindest einem ausgewählt aus Mo: 0,01% oder mehr und 0,30% oder weniger, Cu: 0,01% oder mehr und 1,20% oder weniger und Co: 0,01% oder mehr und 0,20% oder weniger und als Rest aus Fe und unvermeidbaren Verunreinigungen besteht.

2.    Edelstahlblech gemäß Anspruch 1 mit V: (20 $\times$ B Gehalt (%))% oder mehr und 0,050% oder weniger.

**3.** Edelstahlblech gemäß Anspruch 1 oder 2, wobei die chemische Zusammensetzung, in Massen%, zumindest eines ausgewählt aus Nb: 0,01% oder mehr und 0,10% oder weniger und Ti: 0,01% oder mehr und 0,40% oder weniger beinhaltet.

**4.** Edelstahlblech gemäß einem der Ansprüche 1 bis 3, wobei die chemische Zusammensetzung, in Massen%, zumindest eines ausgewählt aus Mo: 0,01% oder mehr und 0,30% oder weniger, Cu: 0,01% oder mehr und 1,20% oder weniger und Co: 0,01% oder mehr und 0,20% oder weniger beinhaltet.

**5.** Edelstahlblech gemäß einem der Ansprüche 1 bis 4, wobei die chemische Zusammensetzung, in Massen%, Ca: 0,0003% oder mehr und 0,0030% oder weniger beinhaltet.


**Revendications**

**1.** Feuille d'acier inoxydable dans laquelle une structure martensitique est formée par une réalisation d'une trempe, ayant une composition chimique consistant en, en % en masse, C : 0,015 % ou plus et moins de 0,100 %, Si : 0,01 % ou plus et 1,00 % ou moins, Mn : 0,01 % ou plus et 2,00 % ou moins, P : 0,040 % ou moins, S : 0,030 % ou moins, Cr : 10,0 % ou plus et moins de 14,0 %, Ni : 0,01 % ou plus et 0,70 % ou moins, Al : 0,001 % ou plus et 0,200 % ou moins, N : 0,005 % ou plus et 0,080 % ou moins, O : 0,0060 % ou moins, B : 0,0002 % ou plus et 0,0020 % ou moins, V : (10 × teneur en B (%)) % ou plus et 0,050 % ou moins, optionnellement Ca : 0,0003 % ou plus et 0,0030 % ou moins, optionnellement au moins un sélectionné parmi Nb : 0,01 % ou plus et 0,10 % ou moins, et Ti : 0,01 % ou plus et 0,40 % ou moins, optionnellement au moins un sélectionné parmi Mo : 0,01 % ou plus et 0,30 % ou moins, Cu : 0,01 % ou plus et 1,20 % ou moins, et Co : 0,01 % ou plus et 0,20 % ou moins, et le reste étant Fe et d'inévitables impuretés.

**2.** Feuille d'acier inoxydable selon la revendication 1, V : (20 × teneur en B (%)) % ou plus et 0,050 % ou moins.

**3.** Feuille d'acier inoxydable selon la revendication 1 ou 2, la composition chimique contenant, en % en masse, au moins un sélectionné parmi Nb : 0,01 % ou plus et 0,10 % ou moins et Ti : 0,01 % ou plus et 0,40 % ou moins.

**4.** Feuille d'acier inoxydable selon l'une quelconque des revendications 1 à 3, la composition chimique contenant, en % en masse, au moins l'un sélectionné parmi Mo : 0,01 % ou plus et 0,30 % ou moins, Cu : 0,01 % ou plus et 1,20 % ou moins, et Co : 0,01 % ou plus et 0,20 % ou moins.

**5.** Feuille d'acier inoxydable selon l'une quelconque des revendications 1 à 4, la composition chimique contenant, en % en masse, Ca : 0,0003 % ou plus et 0,0030 % ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002146489 A
- JP 2004346425 A
- EP 1199374 A1
- EP 2439304 A1
- JP 2007247027 A
- WO 2012157680 A1